**Europäisches Patentamt**

**European Patent Office**

**Office européen des brevets**

(19)

(11) Veröffentlichungsnummer: **0 227 686**
**B1**

## EUROPÄISCHE PATENTSCHRIFT

(12)

(45) Veröffentlichungstag der Patentschrift:
04.01.89

(21) Anmeldenummer: **85905514.7**

(22) Anmeldetag: **21.10.85**

(86) Internationale Anmeldenummer:
**PCT/EP 85/00550**

(87) Internationale Veröffentlichungsnummer:
**WO 86/02611 (09.05.86 Gazette 86/10)**

(51) Int. Cl.⁴: **B 62 D  5/10,** B 62 D  5/06,
B 62 D  7/00

(54) **LENKEINRICHTUNG, INSBESONDERE FÜR SCHMALSPURIGE KRAFTFAHRZEUGE.**

(30) Priorität: **24.10.84  PCT/EP84/00331**

(43) Veröffentlichungstag der Anmeldung:
**08.07.87 Patentblatt 87/28**

(45) Bekanntmachung des Hinweises auf die Patenterteilung:
**04.01.89 Patentblatt 89/1**

(84) Benannte Vertragsstaaten:
**AT DE FR GB IT**

(56) Entgegenhaltungen:
**DE-A-1 630 616**
**DE-A-3 209 057**

(73) Patentinhaber: **ZAHNRADFABRIK FRIEDRICHSHAFEN AKTIENGESELLSCHAFT,
Löwentaler Strasse 100 Postfach 2520, D-7990
Friedrichshafen 1 (DE)**

(72) Erfinder: **DZIUBA, Peter, Im öschle 23, D-7770
Überlingen 12 (DE)**
Erfinder: **RAUTER, Jürgen, Sandöschstrasse 33,
D-7990 Friedrichshafen 1 (DE)**
Erfinder: **FUSSEDER, Günter, Hofwiesenstrasse 6,
D-7070 Schwäbisch Gmünd (DE)**

(74) Vertreter: **Raue, Reimund, Zahnradfabrik
Friedrichshafen AG Löwentaler Strasse 100
Postfach 2520, D-7990 Friedrichshafen 1 (DE)**

EP 0 227 686 B1

**Beschreibung**

Die Erfindung betrifft eine Lenkeinrichtung nach dem Oberbegriff des Anspruchs 1, wie sie auch aus der DE-A-1 630 616 bekannt ist.

Bei der dort beschriebenen, auf fertigungstechnische Ersparnisse und auf Stoßdämpfung gerichteten Konstruktion bildet die Kolbenstange des Stellmotors auch gleichzeitig eine längssteife Spurstange, und diese kann mit üblichen Spurstangenköpfen und Spureinstellelementen kombiniert werden. Dabei ist der Stellmotor selbst in seinem Mittelteil in oder an einer Gelenkverbindung gehalten, die um die Längsmittelachse des Fahrzeuges pendelnd, an einer am Vorderachslagerbock oder einem benachbarten ortsfesten Teil angebrachten Aufnahme sowohl in Längsrichtung des Fahrzeuges verschiebbar geführt als auch um eine senkrechte Achse schwenkbar ist. Die Gelenkverbindung soll dabei eine schlitzförmige Führung aufweisen, die ihrerseits horizontal in einem gabelförmigen Vorsprung der Vorderachse gleitend geradlinig geführt ist, indem der gabelförmige Vorsprung einen senkrecht in den Schlitz der Führung eingreifenden Zapfen aufweist. Dabei soll eine Ausführung mit zwei miteinander fluchtenden gabelförmigen Vorsprüngen und zwei in diese eingreifenden Zapfen, die am Mantel des Stellmotors befestigt sind, bevorzugt werden. Durch die vorgesehene geradlinige Führung ist eine außermittige Gelenkanordnung ausgeschlossen, weil dann der Stellkolben gegenüber dem Achsgehäuse eine Kurvenbahn beschreibt.

Bei Ausführung als Pendelachse eignet sich diese bekannte Ausführung mit geradliniger Führung und mittiger Anordnung speziell für schmalspurige bzw. kompakt zu bauende Kraftfahrzeuge nur mit der Einschränkung, daß die Gelenkverbindung in der Mitte des Stellmotors zum Achskörper bzw. einem sonstigen ortsfesten Punkt mit der Aufhängung der Achse am Fahrzeugrahmen räumlich nicht kollidiert bzw. ihre Zugänglichkeit zu sehr beeinträchtigt wird. Damit dies vermieden wird, muß dort die Gelenkverbindung nämlich relativ stark auskragen bzw. müssen entsprechend große Zwischenräume zwischen der Achse und dem Stellmotor und entsprechend weit ausladende Lenkhebel in Kauf genommen werden können.

Mit zunehmendem Abstand vom Achskörper und mit wachsender Ausladung der Lenkhebel wächst jedoch auch die erforderliche Längsverschieblichkeit der Zapfen und die Beschädigungsgefahr, die Fahrzeuggröße bzw. die Raumnutzungsbehinderung und auch die Beanspruchung der Gelenkverbindungsteile, Lenkhebel usw. Hinzu kommt bei der vom Stand der Technik angegebenen offenen, weit ausladenden Gabelkonstruktion mit schlitzförmiger Führung eine bei Geländefahrzeugen, wie z. B. Schleppern, nicht zu unterschätzende Verschmutzungs- und Beschädigungsgefahr durch im Wege liegende Steine und ähnliche Hindernisse. Ein rasch einsetzender Gelenkverschleiß kann dort bald zu starken Schlägen, lautem Klappern und unsicherer Lenkstabilität bzw. sogar zu Lenkungsbruch führen.

Die Aufgabe der der Erfindung zugrundeliegenden Merkmale des Anspruchs 1 ist es, diesen Stand der Technik in Richtung einer kompakteren, robusteren und betriebssichereren Lenkeinrichtung insbesondere für die Pendelaufhängung von angetriebenen Achsen für Schmalspurfahrzeuge zu verbessern.

Die Lösung wird mit den kennzeichnenden Merkmalen des Anspruchs 1 erreicht.

Nach der Erfindung wird durch Wahl eines auch für Kurvenbahnbewegungen des Stellmotors geeigneten Gelenkverbindung und durch deren Anordnung, statt wie bisher für geradlinig geführte Gelenke nötig, in der Mitte des Stellmotors, nun an einem seiner Enden, so viel Platz gegenüber dem Pendellager der Achse gewonnen, daß Stellmotor und Achse über ihren dazu speziell gestalteten, begrenzte aber allseitig winkelbewegliche Gelenkigkeit aufweisenden Verbindungshebel viel näher zueinander angeordnet sein können. Damit werden auch nur sehr kurze Lenkhebel benötigt und die Bauweise noch kompakter. Durch den geringen Abstand werden auch die Relativbewegungen der Gelenkteile so minimiert, daß dort eine einfachere und verschleißfestere sowie leicht abdeckbare Gelenkverbindungsart verwendbar ist, welche zudem weniger hoch belastet und weniger verschmutzungs- und beschädigungsgefährdet ist, als die gabelförmige, in der Stellmotor-Mitte angebrachte, nach dem Stand der Technik, bei welcher unabgefederte Schiebebewegungen der Zapfen in den schwierig abzudeckenden, schlitzförmigen Gabelöffnungen stattfinden.

Weitere Ausgestaltungen der Erfindung werden durch die Unteransprüche angegeben.

Anspruch 2 gibt eine Gelenkverbindungsart an, nach welcher der Verbindungshebel mit seinem einen Gelenk an einem Drehzapfen am Achsrohr präzise geführt sein kann.

Anspruch 3 erlaubt die Verwendung einfacher, handelsüblicher Kugelpfannengelenke und dadurch auch eine vibrationsunempfindliche und leicht abdichtbare elastische Anlenkung.

Anspruch 4 erlaubt eine speziell für große Lenkeinschlagwinkel vorteilhafte Lenkungsgeometrie.

Anspruch 5 gibt die bevorzugten Lenkgeometriekriterien für große Lenkeinschläge bei guter Lenkstabilität und sehr kleinen Relativbewegungen an den Gelenken für die erfindungsgemäßen Lenkeinrichtungen an.

Anspruch 6 erlaubt eine besonders klemmarme Kompensation der dank der Kompaktanordnung minimalen Achsversatzauswirkungen.

Anspruch 7 zeigt eine Möglichkeit auf, mit nur einem speziell ausgestalteten Kugelgelenk, das eine kleine Höhenverschieblichkeit der Kugel vorsieht, allein auszukommen.

Die Erfindung ist anhand der Zeichnungen eines bevorzugten Ausführungsbeispieles nachfolgend näher beschrieben:

Fig. 1      zeigt einen Teilschnitt der Achse mit Gelenkverbindung, Stellmotor und Pendellager sowie einer Andeutung der Lageveränderungen der Stellmotor-Mitte bei diversen Lenkeinschlägen.

Fig. 2      zeigt eine Draufsicht der kompletten Lenkeinrichtung in Geradeaus-Stellung.

Fig. 3      zeigt die gleiche Draufsicht bei maximalem Lenkeinschlag.

Fig. 4      zeigt eine Vorderansicht der am Achsgehäuse montierten Gelenkverbindung und ihren Anschluß am Stellmotor über zwei Gelenke.

Fig. 5      zeigt hierzu die Draufsicht.

Fig. 6      zeigt hierzu die Seitenansicht.

Fig. 7      zeigt hierzu eine als Metall-Gummi-Verbindung ausgeführte Variante für das Drehgelenk am Achsgehäuse.

Fig. 8      zeigt eine, eine kleine Axialbeweglichkeit des Kugelbolzens in der Kugelpfanne zulassende Gelenkversion.

Fig. 9      zeigt dazu eine Draufsicht.

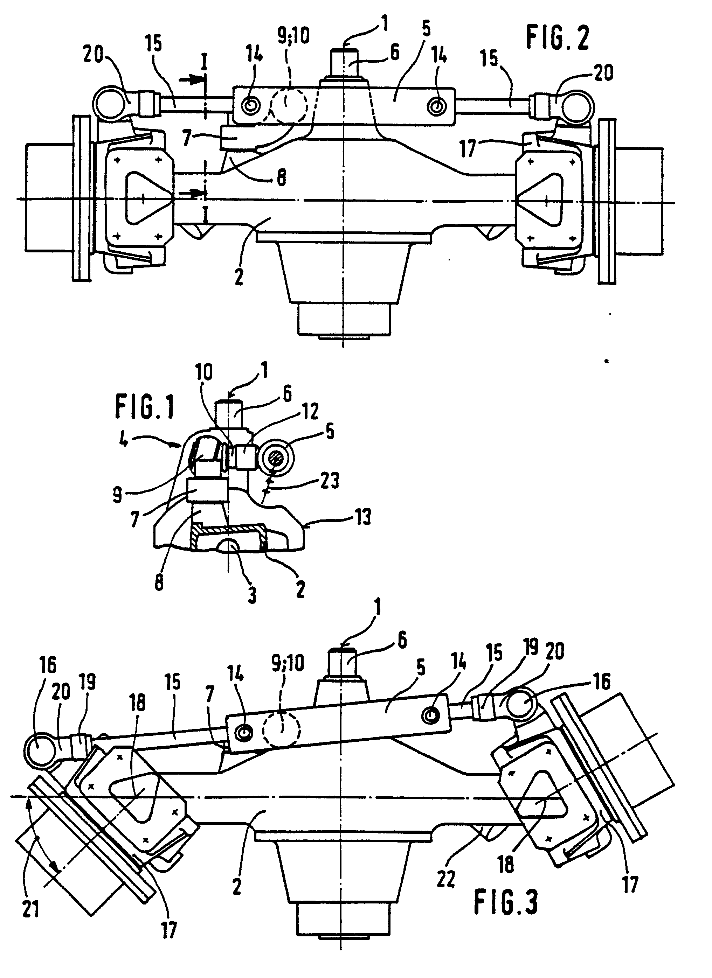

In Fig. 1 ist die Lenkeinrichtung in einem Schnittbild dargestellt, welches wegen des Rückbezuges auf Fig. 2 hier die Fahrzeuglängsachse 1 stehend zeigt. Dadurch ragt aus dem Achsrohr 2, daß die Antriebsweile 3 umhüllt, die Gelenkverbindung 4 zum Stellmotor nach unten, welche in Normallage aus dem Achsrohr 2 an sich nach hinten, bzw. bei Sonderfällen nach vorn, absteht.

In diesem Bild ist hinter der Gelenkverbindung 4 der Pendellagerzapfen 6 zu erkennen. Die Gelenkverbindung 4 besteht hier aus einem, parallel zur Fahrzeuglängsachse 1 ausgerichteten, als Drehgelenkhebel ausgeführten Verbindungshebel 7 an einem Achskörperauge 8, welcher über einen davon rechtwinklig abgekröpften Kugelpfannenhalter 9 und einen darin einmündenden Kugelbolzen 10 mit einem Zapfenende 11, das in einer vom Stellmotor 5 rechtwinklig nach oben (bzw. hier nach der linken Seite) gerichteten Gewindemuffe 12 eingeschraubt ist, eine begrenzte winkelbewegliche Anlenkung zum Stellmotor 5 aufweist und die Kurvenbahn des Stellmotors 5 bei Lenkeinschlägen mitzumachen ermöglicht.

Deutlich ist zu erkennen, daß die Gelenkverbindung 4 so kurz baut, daß es möglich ist, den Stellmotor 5 nur ganz knapp unterhalb des Pendellagerzapfens 6, aber dennoch oberhalb der unteren Kontur des für das Differential in der Mitte erweiterten Achsgehäuses 13 sehr beschädigungsgeschützt anzuordnen, wobei der Achsabstand vom Achsgehäuse 2 und Stellmotor 5 geringer wird als die axiale Ausladung des Pendellagerzapfens 6.

In Fig. 2 ist das Achskörperauge 8 für die Anlenkung der Gelenkverbindung 4 am Achsgehäuse 2 seitlich versetzt neben dem Pendellagerzapfen 6 etwa dort zu erkennen, wo die Verjüngung des Achsgehäuses 2 erreicht ist und wo eines der Enden des Stellmotors 5 zu liegen kommt, an welches die Gelenkverbindung 4 mit deutlichem Abstand von dessen Mitte etwa gegenüber dem einen der Druckölanschlüsse 14 angelenkt ist. Der Stellmotor 5 ist über seine beidseits aus ihm längssteif herausfahrbaren Kolbenstangen 15, die hier auch die Spurstangenfunktion haben, abgestützt in Lenkhebellagern 16. Diese sind unmittelbar an je ein Radkopfgetriebe 17 angeformt, in dem sich auch die nicht gesondert dargestellte Lenkzapfenlagerung 18 befindet, um welche das Radkopfgetriebe 17 mittels des Stellmotors 5 verschwenkbar ist. Die Kolbenstangen 15 sind dazu mit über Spureinsteller 19 justierbaren Stangenköpfen 20 versehen, die auf den Lenkhebellagern 16 drehbar so geführt sind, daß eventuell am Lenkzapfenlanger 18 vorgesehene, hier nicht dargestellte Spreiz- bzw. Nachlaufwinkel keine Klemmung verursachen und daß auch bei extremem Lenkeinschlag in der Größenordnung von über 50° keine Kollision der Kolbenstangen 15 mit dem jeweiligen Radkopfgetriebe 17 erfolgt.

In Fig. 2 ist ein solcher maximaler Lenkeinschlagwinkel 21 dargestellt. Dabei würde eine ungewollte Überschreitung auch durch Anschlag des Radkopfgetriebes 17 gegen am Achsgehäuse 2 angegossene Anschlagaugen 22 verhindert. Auf der dem Pendelzapfenlager 6 gegenüberliegenden Seite des Achsgehäuses 2 ist dieses drehschwenkbar für eine Lagerung im nicht sichtbaren Schaltgetriebegehäuse unter gleichzeitiger Einführung der Differentialantriebswelle ausgestaltet.

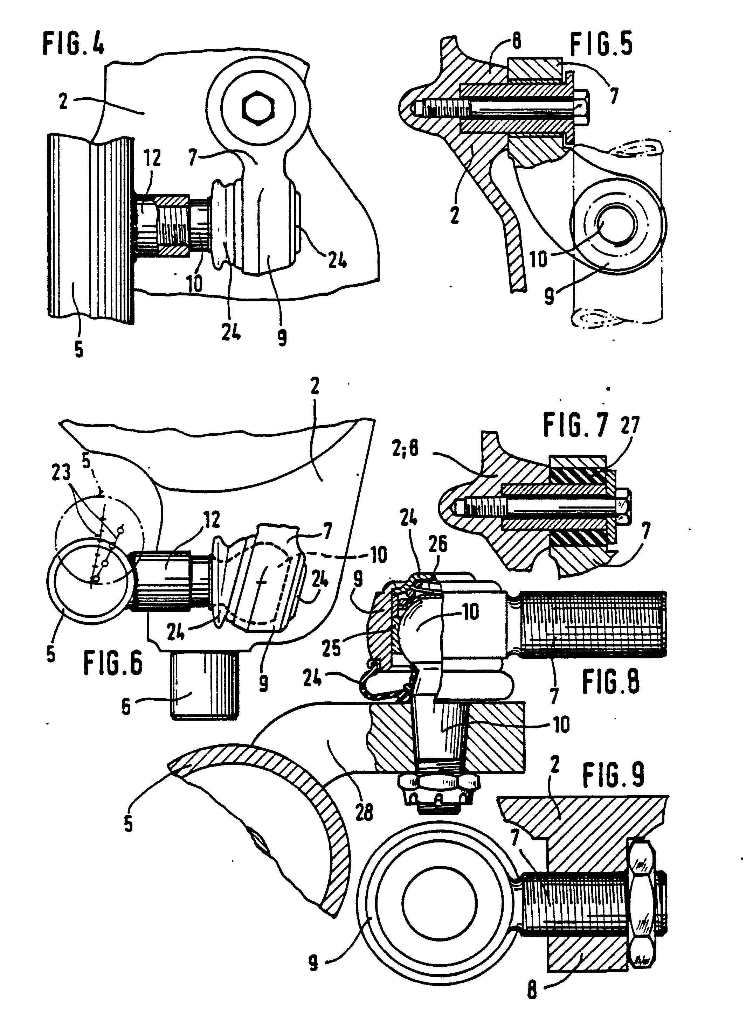

In Fig. 4 ist die Drehbefestigung des Hebels 7 am Achskörperauge 8 in Vorderansicht und Kugelzapfen 10 sowie Stellmotor 5 in Seitenansicht bzw. Querschnitt zeichnerisch vereinfacht gezeigt. Der Abstand des Auges 8 von der Fahrzeuglängsachse 1 in der sich auch der Pendellagerzapfen 6 befindet, beträgt hier etwa die doppelte Länge des Hebels 7. Er ragt nirgendwo über das Profil des Achsgehäuses 2 hinaus und ermöglicht es, den Stellmotor 5 deutlich etwa um sein Durchmesser-Maß oberhalb der Horizontalachse des Achsgehäuses 2 vor Bodenberührung geschüzt anzuordnen, ohne dabei in der Höhe über das Achsgehäuse 2 hinauszubauen. Es brauchen nur rotatorisch abschließende Dichtkappen 24 eingesetzt werden.

In Fig. 5 ist die Drehbefestigung im Achskörperauge 8 geschnitten und das Kugelpfannengelenk 9, 10 in Draufsicht gezeigt. Der Hebel 7 hat hier eine Ausbiegung, mit der das Kugelgelenk 9, 10 vom Achsgehäuse 2 auf genügend Abstand für den Stellmotor 5 gehalten wird.

In Fig. 6 ist die Seitenansicht und die raumsparende Anordnung des Stellmotors 5 hinter der Pendellagerung 6 des Achsgehäuses 2 und die Kippbewegung erkennbar, welche der Kugelzapfen 10 bei Betätigung des Stellmotors 5 in Richtung zum Achsgehäuse 2 hin vollzieht.

Bei Linkskurve bewegt sich die Mitte des Stellmotors 5 auf einer oberen Kurvenbahn, bei Rechtskurve auf einer unteren. Nur bei mittiger Anordnung ist eine geradlinige Bewegung möglich. Die Platzvorteile einer außermittigen Gelenkanordnung wurden also erst dadurch möglich, daß das bekannte Gelenk mit geradliniger Führung erfindungsgemäß ersetzt wurde durch eine Gelenkverbindung 4, die auch Kurvenbahnen des Stellmotors 5 erlaubt und kurz baut.

In Fig. 7 ist als Teilschnitt durch den Hebel 7 bzw. das Achskörperauge 8 eine Gummi-Metall-Lagerung 27 erkennbar, mit der je nach Lenkgeometrie auf eine Drehbarkeit des Hebels 7 gegenüber dem Auge 8 verzichtet werden kann.

In Fig. 8 und 9 ist eine Ausgestaltung des Kugelpfannengelenkes 9, 10 in Querschnitt bzw. Draufsicht gezeigt, in welcher dem Kugelbolzen 10 eine begrenzte Axialbewegung in einem Gleitstein 25 gegen eine elastische Abstützung 26 ermöglicht ist und auf eine Beweglichkeit am Achskörperauge 8 verzichtet werden kann. - Statt mit einer Gewindemuffe 12 ist hierbei der Kugelbolzen 10 über eine Konusverschraubung an einer am Stellkolben 5 angeschweißten Lasche 28 befestigt.

Die Funktion der Lenkeinrichtung unterscheidet sich im wesentlichen gegenüber dem Stand der Technik dadurch, daß beim Betätigen des Stellmotors 5 bzw. bei einer Veränderung von dessen Mittenlage zwischen den Lenkhebellagern 16 eine Drehung des Stellkolbens 5 sowohl um die außerhalb der Fahrzeuglängsachse 1 gelegene Kugelpfanne 9 als auch gleichzeitig um das Drehgelenk des Hebels 7 der Gelenkverbindung 4 stattfindet, weil die Achse des Stellmotors 5 sich unter Drehung von Hebel 7 und Kugelbolzen 10 bei größer werdendem Einschlag dem Achsgehäuse 2 auf einer etwas zur Achse der Antriebswelle 3 hin geneigten Kurvenbahn 23 annähert (siehe auch Fig. 1).

An den beiden Drehpunkten 8 und 9 der Gelenkverbindung treten dabei nur rotatorische Relativbewegungen auf und ist es daher leicht, die betreffenden Lagerstellen mit üblichen Dichtkappen 24 schmutzdicht abzudichten. Es besteht auch die Möglichkeit, die Relativbewegungen eines der Gelenke z. B. durch Wahl bestimmter Spreizungs- und Nachlaufwinkel an der Lenkzapfenlagerung so zu begrenzen, daß man z. B. für Leichtfahrzeuge nur ein Kugelgelenk 9, 10 mit an einem Gleitstück 25 axial höhenverschieblicher Kugel in einer elastischen Abstützung 26 benötigt, oder aber außer dem Drehgelenk 7, 8 dort auch schon nur mit einer Gummi-Metall-Befestigung 27 auskommt.

**Bezugzeichen**

1 Fahrzeuglängsachse
2 Achsgehäuse
3 Antriebswelle
4 Gelenkverbindung
5 Stellmotor
6 Pendellagerzapfen von 2
7 Verbindungshebel
8 Achskörperauge
9 Kugelpfannenhalter
10 Kugelbolzen
11 Zapfenende von 10
12 Gewindemuffe
13 Achsgehäusekontur, Unterseite
14 Druckö.anschlüsse an 5
15 Kolbenstange
16 Lenkhebellager
17 Radkopfgetriebe
18 Lenkzapfenlagerung
19 Spureinsteller
20 Stangenköpfe
21 Lenkeinschlagwinkel
22 Anschlagaugen
23 Kurvenbahn von 5
24 Dichtungskappen
25 Axiallagerungs-Gleitstück
26 Elastische Kugelabstützung
27 Gummi-Metall-Verbindung
28 Lasche

**Patentansprüche**

1. Lenkeinrichtung, insbesondere für schmalspurige Kraftfahrzeuge,
- mit einem an einem Pendellagerzapfen (6) am Fahrzeugrahmen angelenkten Achsgehäuse (2) an dessen Enden Lenkzapfenlager (18) vorgesehen sind, auf denen eine Radnabe bzw. ein Radkopfgetriebe (17) mittels daran angebrachter Lenkhebel (16) schwenkbar angeordnet ist,
- wobei die Lenkhebellager (16) die Enden von als längssteifen Spurstangen dienenden Kolbenstangen (15) aufnehmen,
- welche je nach Beaufschlagungsrichtung antreibbar sind von einem gegenüber dem Achsgehäuse (2) in den Lenkhebellagern (16) verschwenkbaren, doppelt wirkenden Stellmotor (5), der über eine einen Verbindungshebel (7) aufweisende Gelenkverbindung (4) zum Achsgehäuse (2) geführt ist, dadurch gekennzeichnet, daß die Gelenkverbindung (4) seitwärts vom Pendellagerzapfen (6), außerhalb der Mitte des Stellmotors (5) an seinem einen Ende mit allseitiger begrenzter Winkelbeweglichkeit angelenkt ist.

2. Einrichtung nach Anspruch 1, dadurch gekennzeichnet, daß die Gelenkverbindung (4) zwei Gelenke (7, 8, 9, 10) aufweist, von denen ein Gelenk (7, 8) lediglich eine zur Kolbenstange (15) horizontale Drehung des Verbindungshebels (7) ermöglicht.

3. Einrichtung nach Anspruch 1 oder 2, dadurch gekennzeichnet, daß in der Gelenkverbindung (4) ein Kugelpfannengelenk (9, 10) vorgesehen ist, dessen Kugelbolzen (10) am Stellmotor (5) befestigt ist.

4. Einrichtung nach einem der vorstehenden Ansprüche, dadurch gekennzeichnet, daß die Lenkzapfenlagerung (18) sowohl Spreizung als auch Nachlauf aufweist.

5. Einrichtung nach Anspruch 4, dadurch gekennzeichnet, daß die Spreizung im Bereich zwischen 6° und 10° und dem Nachlauf zwischen 3° und 9° gewählt ist.

6. Einrichtung nach einem der vorstehenden Ansprüche, dadurch gekennzeichnet, daß die Gelenkverbindung des Verbindungshebels (7) in einer Gummi-Metall-Verbindung (24) geführt ist.

7. Einrichtung nach einem der vorstehenden Ansprüche, dadurch gekennzeichnet, daß lediglich ein Kugelpfannengelenk (9, 10) mit begrenzt höhenbeweglich geführtem, elastisch abgestütztem Kugelbolzen (10) vorgesehen ist, und daß die Kugelpfanne (9) ebenfalls in einen als Schraubenbolzen ausgeführten Verbindungshebel (7) ausläuft, der über eine Lasche am Stellmotor (5) starr befestigt ist.

## Claims

1. Steering arrangement, particularly for narrow-gauge motor vehicles,
- comprising an axle housing (2) journaled on the vehicle frame by means of a pivot bearing pivot (6) with steering knuckle bearings (15) provided at its ends on which a wheel hub or a wheel hub drive (17) is attached in a pivoting manner by means of steering levers (16) attached thereto,
- wherein the steering lever bearings (16) receive the ends of piston rods (15) serving as longitudinally rigid tie rods
- which may be driven, depending on the direction of actuation, by a double-acting actuator (5) pivotable in the steering lever bearings (16) with respect to the axle housing (2), which actuator is linked to the axle housing (2) via a linkage connection (4) comprising a connecting lever (7),
characterised in that the connecting linkage (4), to the side of the pivot bearing pivot (6), is linked, not to the centre of the actuator (5), but to one of its ends with limited but angularly universally movable articulation.

2. Arrangement according to claim 1, characterised in that the linkage connection (4) comprises two articulations (7, 8, 9, 10) of which one articulation (7, 8) permits horizontal rotation of the connecting lever (7) only with respect to the piston rod (15).

3. Arrangement according to claim 1 or 2, characterised in that in the linkage connection (4) a ball joint (9, 10) is provided, the ball stud (10) of which is fastened to the actuator (5).

4. Arrangement according to one of the above claims, characterised in that the steering knuckle bearing (18) is provided with camber as well as caster.

5. Arrangement according to claim 4, characterised in that the camber is selected in the range from 6° to 10°, and the caster in the range from 3° to 9°.

6. Arrangement according to one of the preceding claims, characterised in that the linkage connection of the connecting lever (7) is contained in a rubber-to-metal link (27).

7. Arrangement according to one of the preceding claims, characterised in that only one ball joint is provided with a ball stud (10) limitedly movable as to height and supported by elastic means, and that ball socket (9) also terminates in a connecting lever (7) implemented as a threaded bolt which is rigidly fastened to actuator (5) via a strap.

## Revendications

1. Dispositif de direction, notamment pour véhicule à moteur à voie étroite,
- comportant un carter d'essieu (2) articulé au châssis du véhicule grâce à un tourillon de palier oscillant (6), les extrémités de ce carter étant pourvues de pivots de direction (18) sur chacun desquels un moyeu de roue ou un réducteur de roue (17) est monté de manière à pivoter au moyen d'un levier de direction (16) respectif,
- dans lequel les paliers des leviers de direction (16) reçoivent les extrémités de tiges de piston (15) servant de barres de connexion rigides longitudinalement,
- ces tiges étant entraînées, selon le sens d'actionnement, par un servomoteur à double effet (5) qui peut pivoter par rapport au carter d'essieu (2) sur les paliers des leviers de direction (16) et qui est guidé par rapport au carter d'essieu (2) au moyen d'une liaison articulée (4) comportant un levier de liaison (7),
caractérisé en ce que ladite liaison articulée (4) comporte, à l'une de ses extrémités, une articulation placée latéralement par rapport à la position dudit tourillon de palier oscillant (6) et à l'écart du milieu du servomoteur (5), et présentent une mobilité angulaire limitée de tous côtés.

2. Dispositif selon la revendication 1, caractérisé en ce que ladite liaison articulée (4) comporte deux articulations (7, 8, 9, 10), dont l'une (7, 8) permet uniquement un pivotement horizontal du levier de liaison (7) par rapport à la tige de piston (15).

3. Dispositif selon la revendication 1 ou 2, caractérisé en ce que ladite liaison articulée (4) comporte une articulation à coussinet sphérique (9, 10), dont le boulon à rotule (10) est fixé au servomoteur (5).

4. Dispositif selon l'une des revendications précédentes, caractérisé en ce que les pivots de direction (18) présentent à la fois de l'inclinaison et de la chasse.

5. Dispositif selon la revendication 4, caractérisé en ce que l'inclinaison des pivots de direction est comprise entre 6° et 10°, et leur chasse entre 3° et 9°.

6. Dispositif selon l'une des revendications précédentes, caractérisé en ce que la liaison articulée dudit levier de liaison (7) comporte un joint métal-caoutchouc (24).

7. Dispositif selon l'une des revendications précédentes, caractérisé en ce qu'il est prévu seulement une articulation à coussinet sphérique (9, 10) comportant un boulon à rotule (10) appuyé élastiquement et mobile en hauteur dans une mesure limitée, et en ce que le coussinet sphérique (9) se trouve aussi dans un levier de liaison (7) constitué par un boulon fileté qui est fixé rigidement au servomoteur (5) par une bride.

FIG. 2

FIG.1

FIG.3

FIG.4

FIG.5

FIG.6

FIG.7

FIG.8

FIG.9